# EUROPEAN PATENT SPECIFICATION

(11) **EP 2 985 173 B1**
(45) Date of publication and mention of the grant of the patent: **08.01.2020**
(21) Application number: 14782767.9
(22) Date of filing: 07.04.2014
(51) Int. Cl.: B60M 1/20, H02G 7/05

(54) **OVERHEAD LINE CANTILEVER**
OBERLEITUNG AUSLEGER
CONSOLE DE LIGNE AÉRIENNE

(30) Priority: 10.04.2013 ES 201330512
(43) Date of publication of application: 17.02.2016
(73) Proprietor: Pfisterer Upresa, S.A., 080025 Barcelona (ES)
(72) Inventor: METRAT, Thierry, E-08025 Barcelona (ES); NADAL MORENO, Raul, E-08025 Barcelona (ES)
(74) Representative: Durán-Corretjer, S.L.P.
(86) International application number: PCT/ES2014/070270
(87) International publication number: WO 2014/167156

(56) References cited:
- EP-A2- 2 551 148
- WO-A1-91/08923
- WO-A2-2010/136955
- ES-T3- 2 054 162
- GB-A- 835 227
- GB-A- 933 972
- GB-A- 933 972
- GB-A- 1 291 642
- JP-A- S57 186 531

## Description

The present invention relates to a overhead line cantilever.

An overhead line cantilever is a beam or assembly of elements for supporting the overhead line of a railway, tram or trolleybus system. It is generally secured to posts but in special situations can be supported on walls, façades or columns.

Usually, direct-current overhead lines are separated from the cantilevers by means of insulators, whereas in alternating-current lines the insulators are usually located in the support to which the overhead line is secured (posts, wall, etc.).

Cantilevers are so called because they are structures that project in cantilever fashion from the element on which they are mounted (generally a post). Their function is to support the elements of the overhead line in their correct position above the train. Generally speaking, the overhead line comprises at least two wires: the contact wire and the messenger wire that supports it. The cantilever has to support both wires in their correct position. The correct position of the overhead wires, with respect to the railway line, referred to the horizontal plane, varies from one support to the next in order to reduce wear on the pantograph, for which reason the point of fixation of the wires varies between contiguous cantilevers.

Due to the lack of standardisation, and the size and weight of the elements that make up the invention, the installation of cantilevers for overhead lines is a labour-intensive task, in which the labour itself represents the main cost of the work. In fact, two teams of workers are necessary for the placement of the cantilevers: a fitting team and another team with measuring apparatus to ensure that the cantilever is in the correct position.

WO 2010/136955 discloses a cantilever according to the precharacterizing portion of claim 1. The main beam has two slots, one for the steady carrier and another for the support clip for the messenger wire, which should be adjusted independently.

WO 91/08923 discloses a cantilever with a diagonal beam and two horizontal beams, one having the support clip for the messenger wire and another having the steady carrier. This one is fixed to the diagonal beam. The horizontal beam having the support clip is telescopic. After adjusting the position of the support clip, it is necessary to adjust the position of the steady carrier.

GB 933972 A also discloses a cantilever wherein the steady carrier is fixed to a non adjustable second horizontal beam. No beam is telescopic.

An aim of the present invention is to disclosure an overhead line cantilever that requires only a single team for its installation.

The present invention relates to a cantilever according to claim 1. Preferred embodiments are the object of the subclaims.

The present invention discloses an overhead line cantilever, of the type comprising a main cantilever beam that receives the elements for securing the wires of the overhead line located at its distal end and a diagonal beam supporting the main beam and inclined in relation to same, in which:
- the main beam is telescopic and comprises a proximal portion and a distal portion that can move telescopically in relation to one another;
- the said wire-securing elements are fixed in the distal portion;
- the said diagonal beam is connected to the horizontal beam by means of a rotatable coupling;
- the said diagonal beam is also telescopic.

The diagonal beam may be joined to the horizontal beam either in its proximal portion or in its distal portion.

Preferably, the distal portion of the main beam can slide freely inside the proximal portion, the beam being provided with an adjustment device that allows the position of the distal portion of the beam to be fixed within a continuous spectrum of adjustment positions.

More preferably, the adjustment device comprises a groove in the proximal portion of the main beam and at least one bolt that passes through the said groove and makes contact with the distal portion of the main beam.

The said hole may be a threaded bore located in a piece in the end of the distal portion of the main beam.

Even more preferably, the said bolt is inserted into a threaded hole in the distal portion of the main beam. Equally preferably, the adjustment device also comprises a sleeve that shrouds the proximal portion of the main beam, with the ability to slide along the same.

In addition, the present invention provides for the adjustment device also to comprise a locking joint ring or washer to fit the head of the bolt.

Preferably, the supporting elements of the cables of the overhead line are joined to the distal portion at dedicated and unique points of the said distal portion.

According to the present invention, the distal portion may have a scale that indicates the offset of the overhead line with respect to the axis of the guide, for example by indicating the said distance or another indirect distance.

In addition, the present invention also provides for the main beam and the proximal beam to be joined to a fixed structure by means of electrical insulators.

By choosing the appropriate morphology and using adjustable telescopic beams, it is possible to situate the overhead lines with precision using a single fitting team.

For a clearer understanding, a number of drawings showing an embodiment of the cantilever forming the subject of the present invention are annexed by way of non-limitative example.
Figure 1 is a perspective view of an embodiment of a cantilever according to the present invention in "pull-in" (braced inwards) configuration.
Figure 2 corresponds to Figure 1, with a different adjustment of the telescopic beams.
Figure 3 is a detail of the adjustment part and the associated scale, which shows a distance of the cantilever according to the degree of displacement or extension of the telescopic beam.
Figure 4 shows a cross-section of the adjustment device.
Figure 5 is a perspective view of an embodiment similar to that of Figure 1 in "push-off" (braced outwards) configuration.

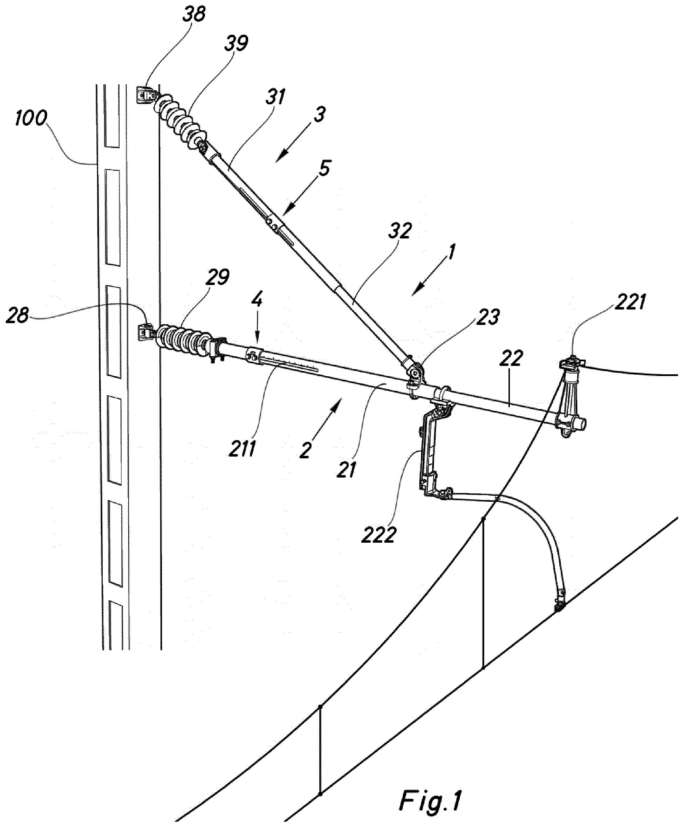

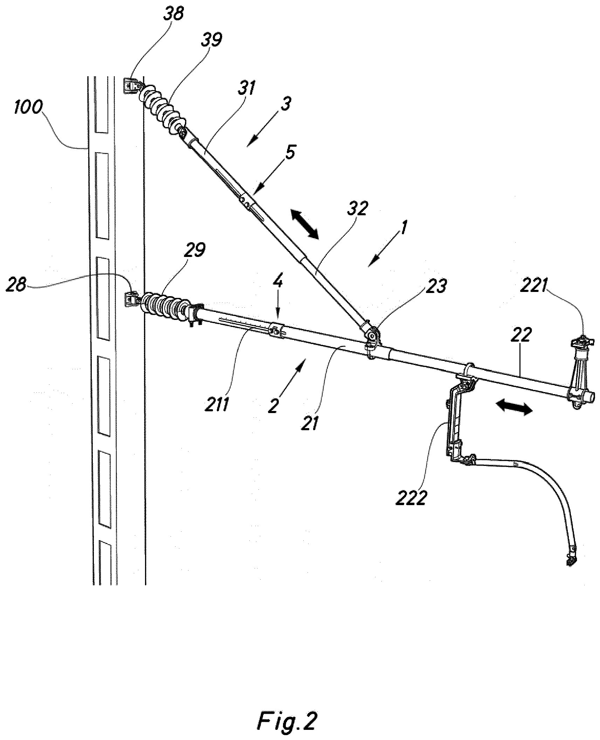

Figures 1 to 3 show an embodiment of an adjustable cantilever.

The cantilever of the example has four main parts:
- A tube (corresponding to what is referred to in this description as the proximal portion -21- of the main beam) with a connector, an insulator -29- and a post bracket -28-.
- A telescopic tube (corresponding to the distal portion -22- of the main beam) which is inserted into the former and slides outwards with supports -221-, -222- for carrier cable or wire ("steady carrier") and messenger cable or wire ("MW support") .
- A tube (corresponding to the proximal portion -31- of the diagonal beam) with upper insulator and post bracket (-39-, -38-).
- A telescopic tube (corresponding to the distal portion of the diagonal beam) which is inserted into the former with fixing accessories.

The unit can be delivered in folded form, or with the parts already assembled. That is to say, with the telescopic tubes already fitted and the connection between the tubes in the folded state, requiring only unfolding and sliding of the telescopic tubes.

A fixing piece with locking washer allows the position of each telescopic beam to be fixed. Ganging scales marked on the proximal portions of the telescopic beam indicate the distance between the post and the overhead line, simplifying installation and adjustment.

It is also possible to add a ganging scale on the upper beam in order to control the length of the said beam (not shown in the drawings).

Figure 1 shows a cantilever according to the invention.

In this case, the cantilever -1- consists of a cantilevered main beam -2- and a diagonal beam -3- whose function is to cooperate with the main beam -2- in supporting the securing elements -221-, -222- of the overhead line wires (not shown in the drawing).

In the example shown, it can be seen that the securing elements comprise a messenger wire support clip -221- and a conductor wire steady carrier -222- in pull-off configuration. In this case, both elements -221-, -222-are fixed to the main beam -2-, without the possibility of modifying their position. In the case shown, the main beam -2- and the diagonal beam -3- are fixed directly to a post -100- with the sole intermediary of the respective insulators -29- and -39- and of hinged post connections -28- and -38- which allow the relative turning of the beams -2- and -3- with respect to the post -100-.

In a manner characteristic of the present invention, the main beam -2- is a telescopic beam, which comprises a proximal portion -21- and a distal portion -22-. The proximal portion -21- comprises a tube of greater diameter than the tube comprised by the distal portion -22-. Thus, the distal portion -22- can slide freely inside the proximal portion -21-.

The messenger wire support clip -221- and the steady carrier -222- are fixed to the distal portion -22-, while the connection between the main beam -2- and the diagonal beam -3- is made by means of a hinged connection -23-, which allows the oblique angle formed between the main beam -2- and the diagonal beam -3- to be varied when the cantilever is adjusted telescopically.

In another preferred embodiment, not shown, the diagonal beam -3- could be joined to the distal portion -22- of the horizontal beam -2-, for example in the vicinity of the clip -221-.

In addition, and for the same purpose, the diagonal beam -3- is telescopic, with a distal portion -32- that slides inside a proximal portion -31-.

Both the proximal portion -21- of the main beam -2- and the proximal portion -31- of the diagonal beam -3- have, at their ends, the insulators -39-, -29- and hinged connectors -28-, -38- to the post -100-.

The relative position between the proximal portions -21-, -31- and the distal portions -22-, -32- of each beam -2-, -3- is fixed by means of respective adjustment devices -4-, -5-. In the embodiment shown, both adjustment devices -4- and -5- of the main beam and of the diagonal beam are similar, for which reason only the adjustment device -4-of the main beam -2- will be described in greater detail below.

The adjustment device -4- of the hinged main beam -2- of the example shown is designed to provide the cantilever with a continuous range of adjustment positions, and to make adjustment easy and rapid.

For its part, the steady carrier -222- may be, for example, of a known type such as that shown in the drawings, which is provided with a support joined rotatably to the main beam -2- and adjustable in height.

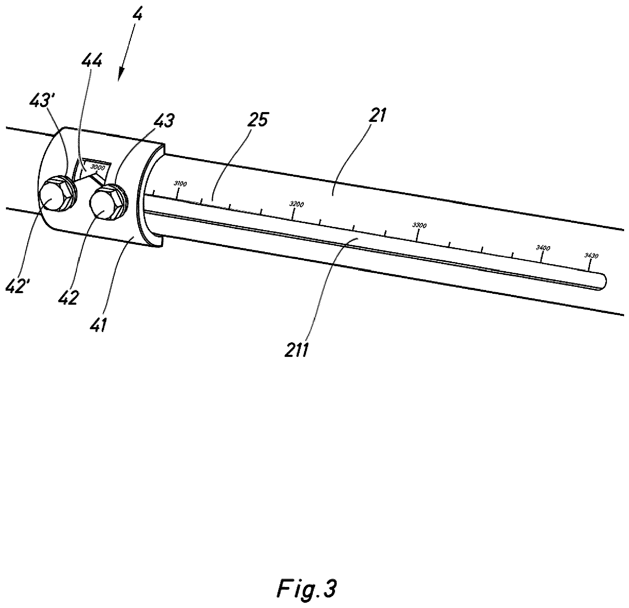

The adjustment device, as can be seen in Figure 3, comprises externally a bushing -4- (in this case a cut bushing) which slides along the proximal portion -21- and has two locking screws -42- and -42'- with locking washers -43- and -43'- which are inserted via a groove -211- in the proximal portion -21- of the beam -2- until they make contact with the distal portion situated inside the proximal portion -21-. The bushing -41- in its turn has an aperture -44- which allows the reading of a scale -25-situated on the surface of the proximal portion -21-, which indicates a distance relating to the degree of adjustment of the telescopic device, such as, for example, the distance from the post to the clip -221-, which is an indirect measurement of the offset of the overhead line with respect to the axis of the guide at that point. It is also possible for the scale -25- to indicate the said offset directly.

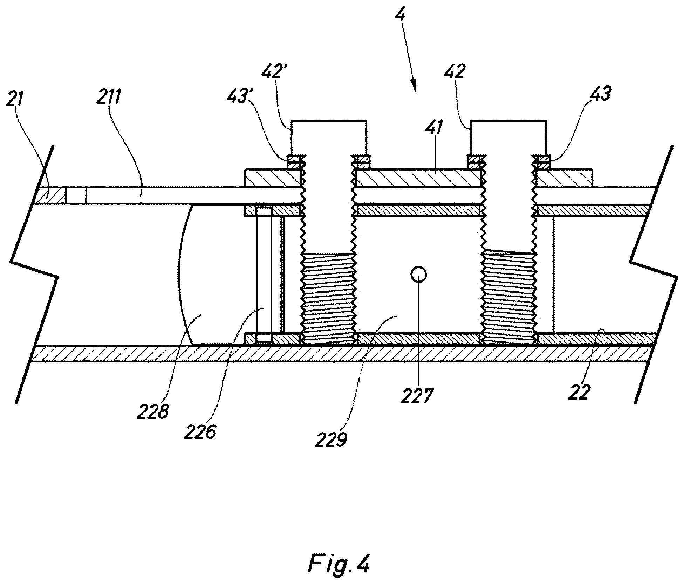

Figure 4 shows a cross-section of the adjustment device -4-, in which it can be seen that the tube that forms the distal portion is inserted into the tube that forms the proximal portion -21-. The tube that forms the distal portion -22- has at its end a guide plug -228- to facilitate guidance inside the proximal portion -21- and has a drilled part -229- that receives the said locking screws -42- y -42'-. The aforementioned bushing -41- can also be seen, as well as the locking washers -43- and -43'-. Both the drilled part -229- and the guide plug -226- have drill holes -227-, -226- perpendicular to each other in order to ensure correct fitting.

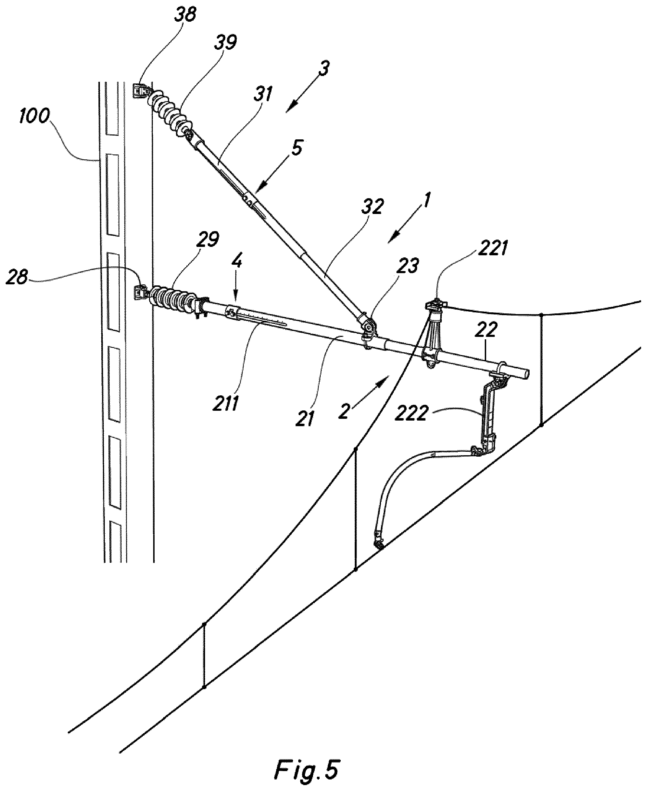

Figure 5 shows an embodiment of a cantilever similar to that of Figures 1 to 3, but in pull-off configuration, for which reason the clip -221- and the steady carrier -222-are in positions which, although fixed, differ from those shown in the aforementioned example of Figures 1 to 3. The other elements of Figure 5 are identical or similar and have been assigned the same numbers, for which reason they will not be explained in greater detail.

There are numerous possible variants of the examples shown in the present invention. Purely by way of example, tubes made from an insulating material might be used in order to avoid the use of insulators -29-, -39-.

Although the invention has been described with respect to examples of preferred embodiments, these must not be considered to be limitative of the invention, which will be defined by the broadest interpretation of the following claims.

## Claims

1. Overhead line cantilever (1), of the type comprising a main cantilever beam (2) that receives the elements (221, 222) for securing the wires of the overhead line, said elements including a support clip (221) for a messenger wire and a steady carrier (222) for a contact wire, and a diagonal beam (3) supporting the said main beam (2) and inclined in relation to the same, the said diagonal beam (3) being connected to the horizontal beam (2) by means of a rotatable coupling (23); the said diagonal beam (3) being also telescopic, **characterised in that**:
- the main beam is telescopically adjustable and comprises a proximal portion (21) and a distal portion (22) that can move telescopically in relation to one another;
- the said securing elements (221, 222) for the wires of the overhead line including a support clip (221) for a messenger wire and a steady carrier for a contact wire (222), are fixed in the said distal portion (22).

2. Overhead line cantilever according to claim 1, **characterised in that** the distal portion (22) of the main beam (2) can slide freely inside the proximal portion, the beam being provided with an adjustment device (4) that allows the position of the distal portion of the beam to be fixed within a continuous spectrum of adjustment positions.

3. Overhead line cantilever according to claim 2, **characterised in that** the adjustment device (4) comprises a groove (211) in the proximal portion (21) of the main beam (2) and at least one bolt (12, 421) that passes through the said groove (211) and makes contact with the distal portion of the main beam.

4. Overhead line cantilever according to claim 3, **characterised in that** the said bolt is inserted into a threaded hole (227, 226) in the distal portion (21) of the main beam (22).

5. Overhead line cantilever according to claim 4, **characterised in that** the threaded hole (227, 226) is located in a piece (41) in the end of the distal portion of the main beam.

6. Overhead line cantilever according to any one of claims 3 to 5, **characterised in that** the adjustment device (4) also comprises a sleeve (41) that shrouds the proximal portion (21) of the main beam (2), with the ability to slide along the same.

7. Overhead line cantilever according to any one of claims 3 to 6, **characterised in that** the adjustment device (4) also comprises a locking joint ring or washer (43, 43') to fit the head of the bolt (42, 42').

8. Overhead line cantilever according to any one of claims 1 to 7, **characterised in that** the supporting elements of the cables of the overhead line are joined to the distal portion (22) at dedicated and unique points of the said distal portion.

9. Overhead line cantilever according to any one of claims 1 to 8, **characterised in that** the distal portion (21) has a gauging scale (25) that indicates the offset of the overhead line with respect to the axis of the guide.

10. Overhead line cantilever according to any one of claims 1 to 9, **characterised in that** the main beam (2) and the diagonal beam (3) are joined to a fixed structure (100) by means of electrical insulators (29, 39).

11. Overhead line cantilever according to any one of claims 1 to 10, **characterised in that** the diagonal beam (3) is joined to the horizontal beam in its proximal portion (21).

12. Overhead line cantilever according to any one of claims 1 to 10, **characterised in that** the diagonal beam (3) is joined to the horizontal beam in its distal portion (22) .

## Patentansprüche

1. Oberleitungsausleger (1), des Typs, umfassend einen Hauptauslegerstab (2), der die Elemente (221, 222) zum Sichern der Drähte der Oberleitung aufnimmt, wobei die Elemente eine Tragklemme (221) für ein Längstragseil und einen gleichbleibenden Träger (222) für einen Kontaktdraht umfassen, und einen Diagonalstab (3), der den Hauptstab (2) trägt und in Bezug auf diesen geneigt ist, wobei der Diagonalstab (3) mit dem Horizontalstab (2) mittels einer drehbaren Kupplung (23) verbunden ist; wobei der Diagonalstab (3) auch teleskopartig ist, **dadurch gekennzeichnet, dass**:
- der Hauptstab teleskopartig einstellbar ist und einen proximalen Abschnitt (21) und einen distalen Abschnitt (22) umfasst, die sich teleskopartig in Bezug zueinander bewegen können;
- die Sicherungselemente (221, 222) für die Drähte der Oberleitung, die eine Tragklemme (221) für ein Längstragseil und einen gleichbleibenden Träger (222) für einen Kontaktdraht umfassen, in dem distalen Abschnitt (22) befestigt sind.

2. Oberleitungsausleger nach Anspruch 1, **dadurch gekennzeichnet, dass** der distale Abschnitt (22) des Hauptstabs (2) frei innerhalb des proximalen Abschnitts gleiten kann, wobei der Stab mit einer Verstellvorrichtung (4) versehen ist, die es ermöglicht, die Position des distalen Abschnitts des Stabs innerhalb eines kontinuierlichen Spektrums von Verstellpositionen zu fixieren.

3. Oberleitungsausleger nach Anspruch 2, **dadurch gekennzeichnet, dass** die Verstellvorrichtung (4) eine Nut (211) in dem proximalen Abschnitt (21) des Hauptstabs (2) und mindestens einen Bolzen (12, 421) umfasst, der durch die Nut (211) hindurchgeht und mit dem distalen Abschnitt des Hauptstabs in Kontakt kommt.

4. Oberleitungsausleger nach Anspruch 3, **dadurch gekennzeichnet, dass** der Bolzen in ein Gewindeloch (227, 226) in dem distalen Abschnitt (21) des Hauptstabs (22) eingesetzt ist.

5. Oberleitungsausleger nach Anspruch 4, **dadurch gekennzeichnet, dass** das Gewindeloch (227, 226) in einem Stück (41) am Ende des distalen Abschnitts des Hauptstabs angeordnet ist.

6. Oberleitungsausleger nach einem der Ansprüche 3 bis 5, **dadurch gekennzeichnet, dass** die Verstellvorrichtung (4) auch eine Hülse (41) umfasst, die den proximalen Abschnitt (21) des Hauptstabs (2) bedeckt, und zwar mit der Fähigkeit entlang dieser zu gleiten.

7. Oberleitungsausleger nach einem der Ansprüche 3 bis 6, **dadurch gekennzeichnet, dass** die Verstellvorrichtung (4) auch einen Sicherungsverbindungsring oder eine Unterlegscheibe (43, 43') umfasst, der/die dem Kopf der Schraube (42, 42') entspricht.

8. Oberleitungsausleger nach einem der Ansprüche 1 bis 7, **dadurch gekennzeichnet, dass** die Stützelemente der Kabel der Oberleitung mit dem distalen Abschnitt (22) an zugeordneten und einzigartigen Punkten des distalen Abschnitts verbunden sind.

9. Oberleitungsausleger nach einem der Ansprüche 1 bis 8, **dadurch gekennzeichnet, dass** der distale Abschnitt (21) eine Messskala (25) aufweist, die den Versatz der Oberleitung in Bezug zu der Achse der Führung anzeigt.

10. Oberleitungsausleger nach einem der Ansprüche 1 bis 9, **dadurch gekennzeichnet, dass** der Hauptstab (2) und der Diagonalstab (3) mittels elektrischer Isolatoren (29, 39) mit einer festen Struktur (100) verbunden sind.

11. Oberleitungsausleger nach einem der Ansprüche 1 bis 10, **dadurch gekennzeichnet, dass** der Diagonalstab (3) in seinem proximalen Abschnitt (21) mit dem Horizontalstab verbunden ist.

12. Oberleitungsausleger nach einem der Ansprüche 1 bis 10, **dadurch gekennzeichnet, dass** der Diagonalstab (3) in seinem distalen Abschnitt (22) mit dem Horizontalstab verbunden ist.

## Revendications

1. Console pour ligne aérienne (1), du type comprenant une poutre principale de console (2) qui reçoit les éléments (221, 222) pour tenir les fils de la ligne aérienne, lesdits éléments comprenant une pince support (221) pour un fil porteur et un support fixe (222) pour un fil conducteur de contact, et une poutre diagonale (3) supportant ladite poutre principale (2) et inclinée par rapport à celle-ci, ladite poutre diagonale (3) étant connectée à la poutre horizontale (2) au moyen d'un couplage rotatif (23) ; ladite poutre diagonale (3) étant également télescopique, **caractérisée en ce que** :
- la poutre principale est ajustable de façon télescopique et comprend une portion proximale (21) et une portion distale (22) qui peuvent se déplacer de façon téléscopique l'une par rapport à l'autre ;
- lesdits éléments de tenue (221, 222) pour les fils de la ligne aérienne, comprenant une pince support (221) pour un fil support et un support fixe pour un fil conducteur de contact (222), sont fixés dans ladite portion distale (22).

2. Console pour ligne aérienne selon la revendication 1, **caractérisée en ce que** la portion distale (22) de la poutre principale (2) peut coulisser librement à l'intérieur de la portion proximale, la poutre étant munie d'un dispositif d'ajustement (4) qui permet de fixer la position de la portion distale de la poutre dans une plage continue de positions d'ajustement.

3. Console pour ligne aérienne selon la revendication 2, **caractérisée en ce que** le dispositif d'ajustement (4) comprend une rainure (211) dans la portion proximale (21) de la poutre principale (2) et au moins un boulon (12, 421) qui traverse ladite rainure (211) et fait contact avec la portion distale de la poutre principale.

4. Console pour ligne aérienne selon la revendication 3, **caractérisée en ce que** ledit boulon est inséré dans un trou fileté (227, 226) dans la portion distale (21) de la poutre principale (22).

5. Console pour ligne aérienne selon la revendication 4, **caractérisée en ce que** le trou fileté (227, 226) est situé dans une pièce (41) dans l'extrémité de la portion distale de la poutre principale.

6. Console pour ligne aérienne selon l'une quelconque des revendications 3 à 5, **caractérisée en ce que** le dispositif d'ajustement (4) comprend également une douille (41) qui enveloppe la portion proximale (21) de la poutre principale (2), avec la capacité de glisser le long de celle-ci.

7. Console pour ligne aérienne selon l'une quelconque des revendications 3 à 6, **caractérisée en ce que** le dispositif d'ajustement (4) comprend également une bague ou rondelle de liaison de verrouillage (43, 43') pour s'adapter à la tête du boulon (42, 42').

8. Console pour ligne aérienne selon l'une quelconque des revendications 1 à 7, **caractérisée en ce que** les éléments de soutien des câbles de la ligne aérienne sont reliés à la portion distale (22) à des points dédiés et uniques de ladite portion distale.

9. Console pour ligne aérienne selon l'une quelconque des revendications 1 à 8, **caractérisée en ce que** la portion distale (21) comprend une échelle de mesure (25) qui indique le décalage de la ligne aérienne par rapport à l'axe du guide.

10. Console pour ligne aérienne selon l'une quelconque des revendications 1 à 9, **caractérisée en ce que** la poutre principale (2) et la poutre diagonale (3) sont reliées à une structure fixe (100) au moyen d'isolateurs électriques (29, 39).

11. Console pour ligne aérienne selon l'une quelconque des revendications 1 à 10, **caractérisée en ce que** la poutre diagonale (3) est reliée à la poutre horizontale selon sa portion proximale (21).

12. Console pour ligne aérienne selon l'une quelconque des revendications 1 à 10, **caractérisée en ce que** la poutre diagonale (3) est reliée à la poutre horizontale selon sa portion distale (22).
